# EUROPEAN PATENT SPECIFICATION

(11) **EP 1 788 332 B1**
(45) Date of publication and mention of the grant of the patent: **13.05.2009**
(21) Application number: 06123983.6
(22) Date of filing: 14.11.2006
(51) Int. Cl.: F27B 19/00, F27D 17/00

(54) **Thermal treatment plant with energy recovery for light alloy elements**
Wärmebehandlungsanlage mit Energierückgewinnung für Leichtmetallelemente
Système de traitement thermique avec récupération de l'énergie pour éléments à base des métaux légers

(30) Priority: 21.11.2005 IT MI20052220
(43) Date of publication of application: 23.05.2007
(73) Proprietor: HTE S.r.l., 27058 Voghera (PV) (IT)
(72) Inventor: Crespi, Ezio, 20025, Legnano (Milan) (IT)
(74) Representative: De Gregori, Antonella

(56) References cited:
- EP-A1- 1 314 944
- DE-A1- 4 416 233
- FR-A1- 2 500 606

## Description

The present invention relates to a thermal treatment plant for elements made of a light alloy, with energy recovery.

In the technological field of light alloys one of the necessary steps is thermal treatment for enhancing the characteristics of the end-product.

In particular, among light alloys from plastic processing, light alloys from austempering are inclined to considerably improve their mechanical characteristics as a result of the austempering.

The austempering of light alloys is a thermal treatment consisting of a structural or solubilization tempering and aging.

The tempering of light alloys consists in heating to a suitable temperature selected in relation to the material, for aluminum and its alloys for example the heating temperature is in the order of 480-540°C.

This temperature is maintained for the time necessary for obtaining the complete solubilization of the secondary components of the alloy in the primary components.

A sudden subsequent cooling makes the solutions thus obtained substantially stable to ordinary temperatures.

Aging is then effected, which consists in thermal treatment at a low temperature (natural aging) or medium-high temperature (artificial aging) during which there is the formation of the hardening phases.

In the second phase pertinent to the present invention, a considerably increased aging rate is obtained by effecting the process in furnaces with temperatures of 120-160°C.

From what is specified above, it can be deduced that a considerable energy consumption is necessary in the heating phases of the various types of treatment.

Different kinds of heating are currently known:
- electric heating, which allows a high thermal yield but implies enormous running costs;
- indirect heating with radiant tube burners without a heat recovery which provides a low thermal yield, even if the running and maintenance costs are accessible;
- direct heating with free flame burners allows a higher but modest thermal yield with respect to the indirect system, and with accessible running and maintenance costs.

As a whole, the above three systems are not satisfactory as they all have limitations which in any case result in a high energy consumption.

A heat treatment apparatus wheerby a recover of heat is performed is known from EP-A1-1314944.

According to EP-A1-1314944 a heat-treatment apparatus is provided incorporating a rotary heat-treatment furnace, in which a work piece is heat-treated while being rotated in the fluidized bed, as the solution and/or aging treatment furnaces; removing dust from the exhaust gases discharged from the solution treatment furnace by a dust collector, and recovering the waste heat from the exhaust gases by an heat exchanger as the heat source for the aging treatment furnace.

The Applicant has therefore felt the necessity of solving the problem of the high energy consumption required for the running of a thermal treatment plant of metallic elements, in particular made of light alloys, to be subjected to solubilization tempering and subsequent aging.

A general objective of the present invention is therefore to provide a plant in which the exploitation of the thermal content of the fumes produced by the direct and indirect heating produced by the burners is optimized.

A further objective of the present invention is to reduce the number of emission points of fumes into the atmosphere.

Another objective of the present invention is to provide a plant in which the maintenance of the heating system is facilitated and the acoustic pollution level caused by the burners is reduced during their functioning.

These and other objectives according to the present invention are achieved by means of a thermal treatment plant for elements made of a light alloy having energy recovery as illustrated in claim 1.

Further characteristics of the invention are object of the dependent claims.

The thermal treatment plant of elements made of a light alloy according to the present invention comprises a solubilization furnace equipped with first heating means, a tempering tank, an aging furnace equipped with second heating means, the plant also comprises a pulsating burner connected to the two furnaces and second heating means are present for recovering the thermal energy of the fumes produced by the first heating means and the pulsating burner.

The characteristics and advantages of a plant according to the present invention will appear more evident from the following illustrative and non-limiting description, referring to the enclosed schematic drawings in which:
figure 1 is a scheme of the plant according to the invention;
figure 2 is a schematic view of a different embodiment of the plant according to the invention;
figure 3 is a schematic view of a variant of the embodiment of the plant according to the invention;
figures 4 and 5 schematically illustrate two different embodiments of the plant of figure 3.

With reference to the figures, these schematize a thermal treatment plant 10 of end-products made of a light alloy, of which a non-limiting example is wheel rims 13 for motor vehicles.

The plant 10 comprises a solubilization furnace 20, a tempering tank 11 and an aging furnace 40.

The principle on which the present invention is based lies in the fact that the combustion fumes, leaving the heat recoverers and burners positioned in the maintenance zones, still have a high energy content which is worth exploiting.

This energy potential is consequently more than sufficient for the heating of the aging furnace which must normally operate at temperature ranging from 160°C to 180°C.

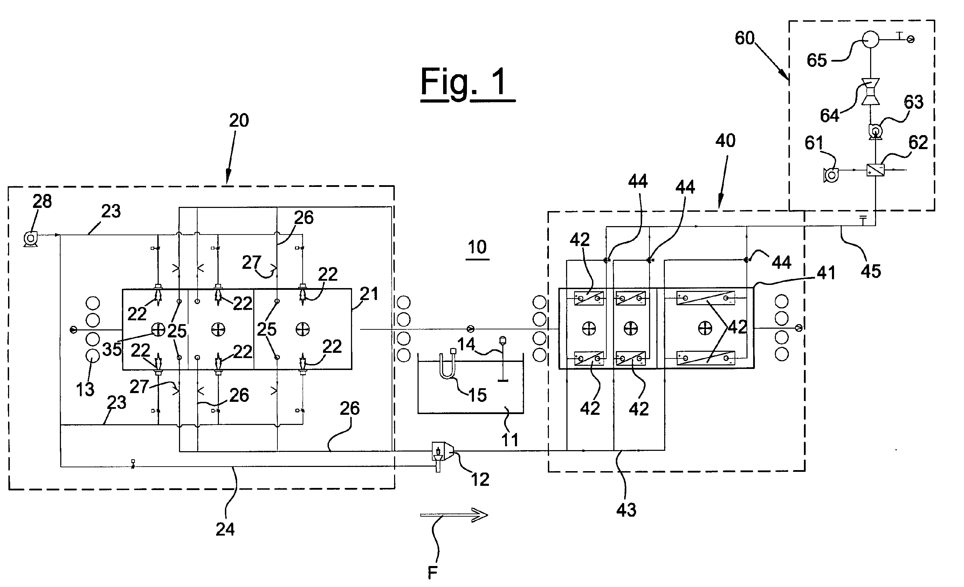

According to a first embodiment of the invention illustrated in figure 1, the plant 10 comprises a tempering furnace 20 of the direct heating type and an aging furnace 40 of the indirect type.

The light alloy elements 13 to be treated are introduced into the furnace 20 according to the direction of the arrow F.

The furnace comprises an insulated casing 21 in which the temperature is raised by first heating means consisting of direct burners 22 which are fed by a combustion fan 28.

The combustion fan 28 supplies the direct burners 22 positioned in the furnace with comburent air through first ducts 23 and also feeds a pulsating burner 12 by means of a second duct 24.

After being moved by fans 35, the fumes produced inside the furnace 20 are conveyed to specific stacks 25 and sent by means of lines 26 first to the pulsating burner 12 and subsequently, by means of lines 43 to second heating means with which the aging furnace 40 is equipped, consisting of exchanger batteries 42, i.e. indirect heating elements.

Specific three-way valves 44 provide, in one position, for the feeding of the heating exchanger batteries 42 or in another position, for sending the fumes to a fume discharging apparatus 60 by means of the discharge line 45.

The light alloy elements 13 which can be wheel rims of motor vehicles of different dimensions remain in the tempering tank 11 schematized equipped with stirring 14 and heater 15 for maintaining the pre-established temperature for the tempering.

The light alloy elements then pass into the insulated casing 41 of the aging furnace 40 to be sent for other processings.

The fume discharge apparatus 60 which is situated on the discharge line 45 is equipped with a specific fan 61 joined to an air-air exchanger 62 in order to lower the temperature of the fumes drawn by an extraction fan 63 and, if necessary, heat the building where the plant is installed.

A Venturi flow-meter 64 situated downstream of the extraction fan 63, equipped with an inverter, measures the air volume passing through the exchanger batteries 42 of the aging furnace 40.

In order to ensure that the flow-rate intake is constant, in the case of maintenance phases of the solubilization furnace 20, specific unidirectional valves 27 (clapets) provide for the correct air flow to the pulsating burner 12 for the heating and entry to the exchanger batteries 42 of the aging furnace 40.

Thanks to the fume conveying system on the single discharge line 45, only one stack 65 for the discharge of the fumes is necessary for the whole process.

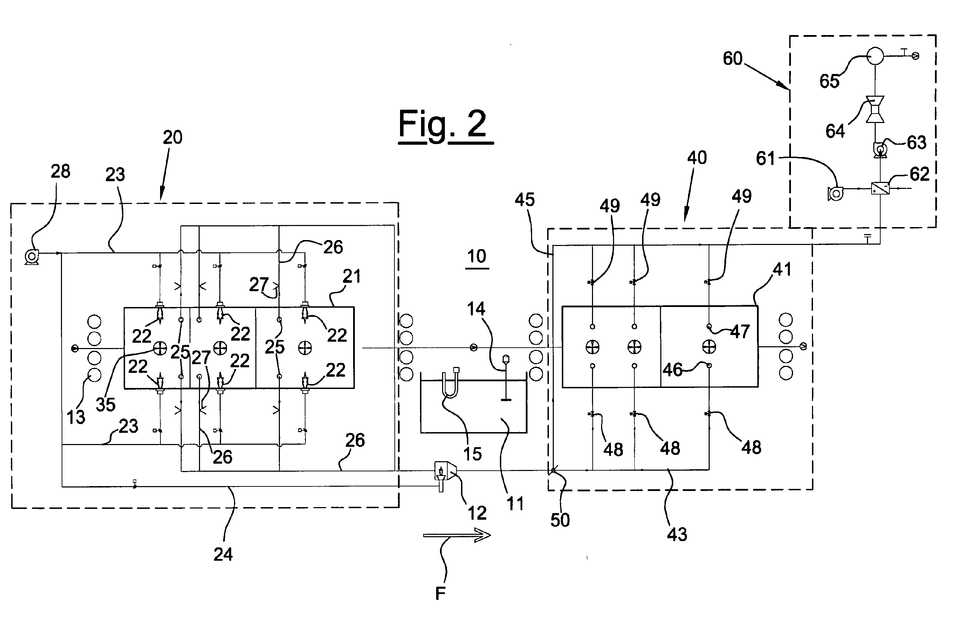

A different embodiment of the plant according to the invention is illustrated in figure 2, in this second embodiment the solubilization furnace 20, the tempering tank 11, the pulsating burner 12 and discharge apparatus 60 have the characteristics described above with reference to figure 1, whereas the aging furnace 40 is produced with direct heating.

The aging furnace 40 in fact envisages the feeding of the fumes which are sent into line 43 after passing through the pulsating burner 12 and sent to direct inlet mouths 46 in the aging furnace 40.

The fumes are removed by suction mouths 47 and sent to the discharge duct 45 which leads to the discharge apparatus 60.

The fume flow regulation is effected by means of inlet valves 48 arranged along branchings of the ducts 43 so as to control each inlet mouth 46.

Said inlet valves 48 are operatively connected to discharge valves 49 positioned on branchings of the discharge duct 45 in order to provide the pre-established temperature in the aging furnace.

If the temperature must be maintained in the aging furnace, the energy required is obviously reduced and consequently a partialization valve 50 is envisaged upstream of the aging furnace 40 to intercept the fumes coming from the pulsating burner and send them directly to the discharge line 45.

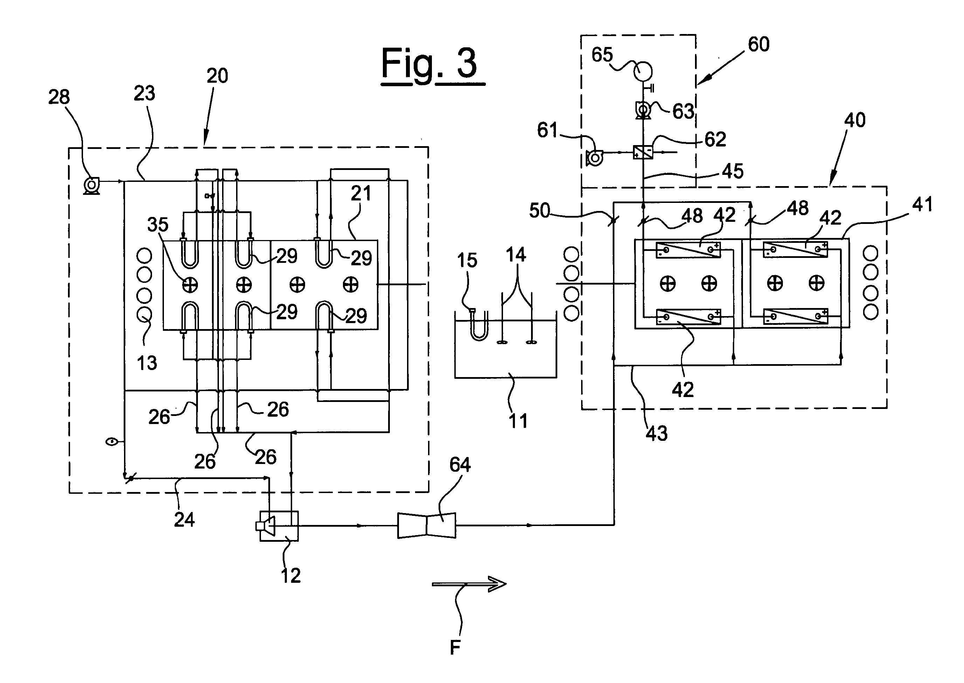

A variant embodiment of the plant according to the invention is illustrated in figure 3.

Said variant has the solubilization furnace 20 with indirect heating and the aging furnace 40 with indirect functioning as illustrated and described with reference to figure 1.

The combustion fan 28 provides for the feeding supplying comburent air to indirect radiant tube burners 29 positioned along the solubilization furnace, whereas a partial quota of the air is diverted by means of the second duct 24 to the pulsating burner 12.

The fumes are then conveyed through lines 26 and also sent to the pulsating burner 12 to be subsequently sent to the indirect heating batteries, i.e. to the exchangers 42 of the aging furnace.

The inlet valves 48 are positioned at the outlet of pairs of exchangers 42 for controlling the correct temperature in the aging furnace.

In the case of maintenance phases in the aging furnace, the partialization valve 50 sends the fumes to line 45.

In this variant the Venturi flow-meter 64 is situated immediately downstream of the pulsating burner 12 and provides for the measuring of the flow-rate of the heated fumes, through the exchanger batteries 42 of the aging furnace 40.

The fumes are subsequently sent to the discharge apparatus 60.

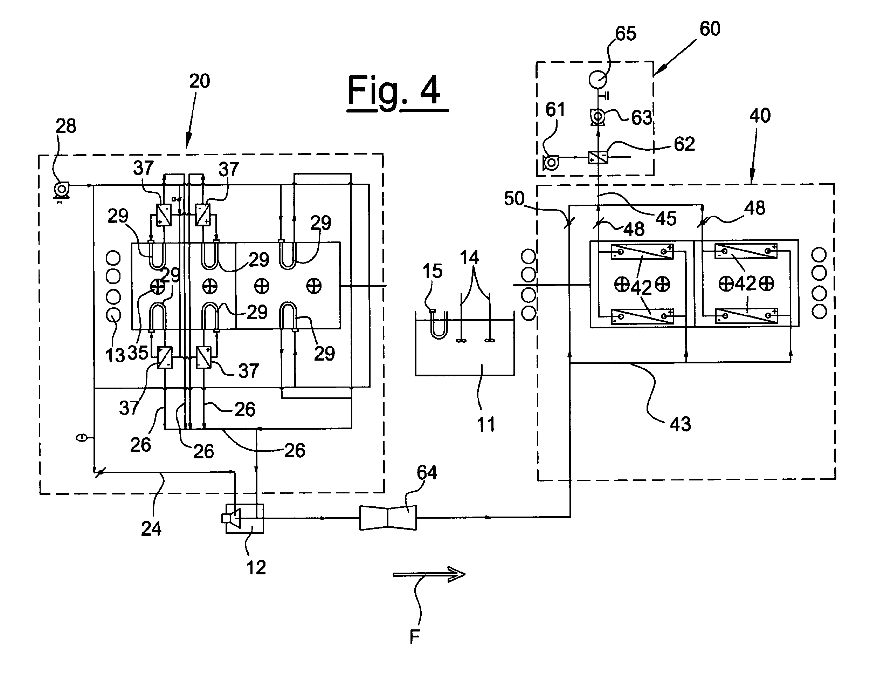

Figure 4 illustrates a different embodiment of the variant described with reference to figure 3.

This embodiment with the solubilization furnace with indirect heating and indirect aging furnace, comprises the presence of exchanger elements 37 in series with each of the indirect radiant tube burners 29.

The air introduced by the combustion fan 28 into the burners 29 of the solubilization furnace is preheated with the fumes leaving each single burner to reduce their consumption.

The remaining part of the plant and process is the same as that presented with reference to figure 3.

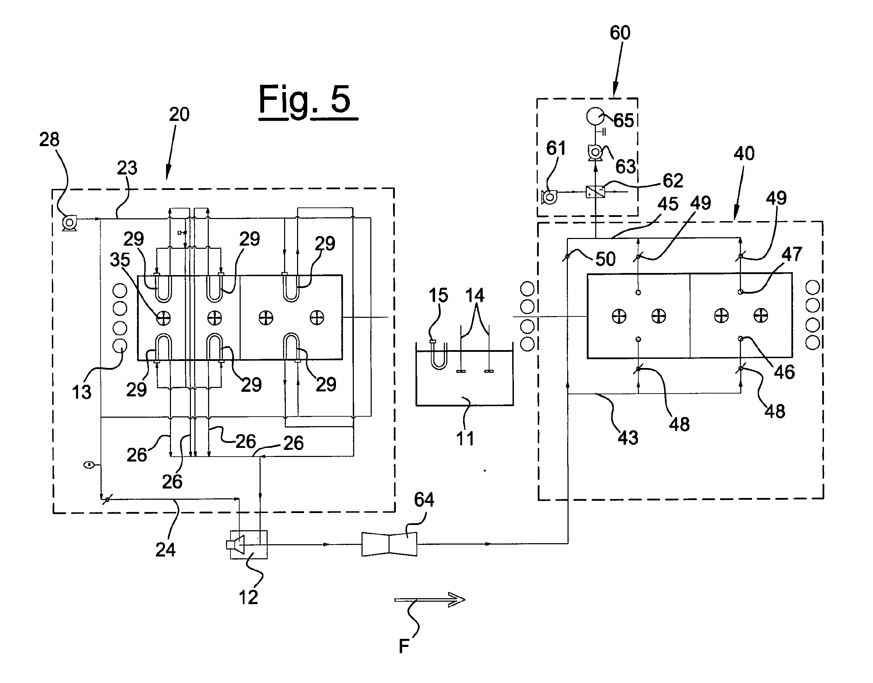

Finally, figure 5 presents a second embodiment of the variant of figure 3.

This variant envisages the solubilization furnace with indirect heating and the aging furnace with direct heating, consequently with a configuration as a combination of the characteristics described above.

In particular, in this embodiment, the combustion fan 28 provides for the feeding supplying comburent air to indirect radiant tube burners 29 positioned along the solubilization furnace, whereas a partial quota of the air is diverted by means of the second duct 24 to the pulsating burner 12.

The fumes leaving the solubilization furnace are then conveyed through lines 26 and also sent to the pulsating burner 12 to be subsequently sent to the aging furnace 40.

Analogously to the case illustrated in figure 3, the aging furnace 40 envisages the feeding of the fumes which are conveyed into line 43 after passing through the pulsating burner 12 and sent to direct inlet mouths 46 in the aging furnace 40.

The fumes are removed by suction mouths 47 and sent to the discharge duct 45 which leads to the discharge apparatus 60.

The flow regulation of the fumes is effected by means of inlet valves 48 positioned along branchings of the ducts 43 so as to control each inlet mouth 46.

Said inlet valves 48 are operatively connected to discharge valves 49 positioned on branchings of the discharge duct 45 in order to provide the pre-established temperature in the aging furnace.

If the temperature must be maintained in the aging furnace, the energy required is obviously reduced and consequently a partialization valve 50 is envisaged to intercept the fumes coming from the pulsating burner and send them directly to the discharge line 45.

Also in the present embodiment the Venturi flow-meter 64 is situated downstream of the pulsating burner 12 and provides for the measuring of the flow-rate of the heated fumes through the exchanger batteries 42 of the aging furnace 40.

The main advantage obtained with the present invention is energy saving, it should also be remembered however that as there are no burners to regulate, the maintenance of the aging plant is also considerably simplified.

It is also important to remember that there is a reduction in the noise level of the plant as the noise caused by the burners, including those existing on the solubilization furnace, is limited.

The uniformity of the temperature in the aging furnace is respected in a order of ± 3°C.

The plant according to the invention is equipped with the most modern heating and temperature control systems. The industrial indirect radiant tube burners installed which equip the plant in the raised temperature area in the solubilization furnace, can be equipped with a preheated combustion air system, which, by exploiting the latent heat of the combustion fumes, preheat the comburent air to a temperature close to 220°C and consequently lower the temperature of the combustion fumes.

The plant according to the invention can therefore be indifferently of the thermal treatment type having direct or indirect heating of the solubilization furnace, with similar thermal yield and functioning reliability characteristics.

By allowing an energy saving on the consumptions, the plant according to the invention favours a reduction in the greenhouse effect on the environment.

## Claims

1. A plant (10) for the thermal treatment of light alloy elements (13), comprising a solubilization furnace (20) equipped with first heating means (22, 29), a tempering tank (11), an aging furnace (40) equipped with second heating means (42, 46), **characterized in that** said plant also comprises a pulsating burner (12) connected to said two furnaces (20, 40) and second heating means (42, 46) are present for recovering the thermal energy of the fumes produced by the first heating means (22, 29) and the pulsating burner (12).

2. The plant (10) according to claim 1, wherein lines (26) are present for conveying the fumes generated in the solubilization furnace (20) first to the pulsating burner (12) and subsequently, by means of lines (43) to the second heating means (42, 46) with which the aging furnace (40) is equipped.

3. The plant (10) according to claim 1, wherein a combustion fan (28) provides for the supply of comburent air to the first heating means (22, 29) positioned in the solubilization furnace (40) through first ducts (23) and also for feeding the pulsating burner (12) by means of a second duct (24).

4. The plant (10) according to claim 1, wherein downstream of said aging furnace, there is a discharge apparatus (60) of the fumes connected by means of the discharge line (45).

5. The plant (10) according to claim 4, wherein said discharge apparatus (60) of the fumes which is situated on the discharge line (45) is equipped with a fan (61) joined to an air-air exchanger (62) so as to lower the temperature of the fumes drawn by an extraction fan (63).

6. The plant (10) according to claim 5, wherein a Venturi flow-meter (64) is also envisaged situated downstream of the pulsating burner or extraction fan (63), for measuring the air volume passing through the aging furnace (40).

7. The plant (10) according to claim 6, wherein said second heating means (42) with which the aging furnace (40) is equipped, consist of indirect heating elements in the form of exchanger batteries (42).

8. The plant (10) according to claim 7, wherein three-way valves (44) are envisaged for providing, in one position, for the feeding of the heating exchanger batteries (42) or in another position, for sending the fumes to the fume discharge apparatus (60).

9. The plant (10) according to claim 8, wherein unidirectional valves (27), clapets, are also envisaged, suitable for providing for the correct air flow to the pulsating burner (12) for the heating and entry to the exchanger batteries (42) of the aging furnace (40).

10. The plant (10) according to claim 1, wherein said aging furnace (40) is produced with direct heating, obtained by means of the feeding of the fumes which are conveyed in line (43) after passing through the pulsating burner (12) and sent to direct inlet mouths (46) and subsequently removed by suction mouths (47) and sent to the discharge duct (45).

11. The plant (10) according to claim 10, wherein inlet valves (48) are present, positioned along branchings of the ducts (43) so as to control each inlet mouth (46), said inlet valves (48) being operatively connected to discharge valves (49) situated on branchings of the discharge duct (45) so as to provide the pre-established temperature in the aging furnace.

12. The plant (10) according to claim 10, wherein a partialization valve (50) is envisaged upstream of the aging furnace (40) for intercepting the fumes coming from the pulsating burner and sending them directly to the discharge line (45).

13. The plant (10) according to claim 1, wherein said solubilization furnace is produced with indirect heating and equipped with indirect radiant tube burners (29) positioned along the solubilization furnace.

14. The plant (10) according to claim 13, wherein the plant has the solubilization furnace with indirect heating and the aging furnace with indirect heating, by means of exchanger elements (37) in series with each of the tubes of the indirect radiant tube burners (29).

15. The plant (10) according to claim 1, wherein the plant has the solubilization furnace (20) with indirect heating and the aging furnace (40) with direct heating.

## Patentansprüche

1. Anlage (10) für die thermische Behandlung von Leichtmetalllegierungselementen (13), umfassend einen Lösungsofen (20), der mit ersten Heizmitteln (22,29) ausgestattet ist, einen Wärmebehandlungstank (11), einen Alterungsofen (40), der mit zweiten Heizmitteln (42,46) ausgestattet ist, **dadurch gekennzeichnet, dass** die Anlage auch einen pulsierenden Brenner (12), der mit den zwei Öfen (20,40) verbunden ist, aufweist und zweite Heizmittel (42,46) zur Rückgewinnung der Wärmeenergie der Rauchgase, die von den ersten Heizmitteln (22,29) und dem pulsierenden Brenner (12) produziert werden, vorhanden sind.

2. Anlage (10) gemäß Anspruch 1, wobei Leitungen (26) zum Leiten der Rauchgase, die in dem Lösungsofen (20) erzeugt werden, zuerst zu dem pulsierenden Brenner (12) und anschließend mittels Leitungen (43) zu den zweiten Heizmitteln (42,46), mit welchen der Alterungsofen (40) ausgestattet ist, vorhanden sind.

3. Anlage (10) gemäß Anspruch 1, wobei ein Verbrennungsgebläse (28) für die Zufuhr von Verbrennungsluft zu den ersten Heizmitteln (22,29), positioniert im Lösungsofen (40), durch erste Leitungen (23) und auch für die Versorgung des pulsierenden Brenners (12) mittels einer zweiten Leitung (24) sorgt.

4. Anlage (10) gemäß Anspruch 1, wobei stromabwärts des Alterungsofens eine Austragungsapparatur (60) für die Rauchgase ist, die mittels der Austragungsleitung (45) angeschlossen ist.

5. Anlage (10) gemäß Anspruch 4, wobei die Austragungsapparatur (60) für die Rauchgase, die an der Austragungsleitung (45) angeordnet ist, mit einem Gebläse (61) ausgestattet ist, das mit einem Luft-Luft-Austauscher (62) verbunden ist, um so die Temperatur der Rauchgase zu senken, die durch ein Absauggebläse (63) abgezogen werden.

6. Anlage (10) gemäß Anspruch 5, wobei auch ein Venturi-Durchflussmessgerät (64) angeordnet stromabwärts des pulsierenden Brenners oder des Absauggebläses (63) zur Messung des Luftvolumens, das durch den Alterungsofen (40) geht, vorgesehen ist.

7. Anlage (10) gemäß Anspruch 6, wobei die zweiten Heizmittel (42), mit welchen der Alterungsofen (40) ausgestattet ist, aus indirekten Heizelementen in der Form von Austauscherbatterien (42) bestehen.

8. Anlage (10) gemäß Anspruch 7, wobei Dreiwegeventile (14) vorgesehen sind, um in einer Position für die Versorgung der Heizaustauscherbatterien (42) oder in einer anderen Position zum Transport der Rauchgase zu der Rauchaustragungsapparatur (60) zu sorgen.

9. Anlage (10) gemäß Anspruch 8, wobei auch Einrichtungsventile (27), Klappenventile, vorgesehen sind, die geeignet sind, um den richtigen Luftstrom zu dem pulsierenden Brenner (12) für die Erwärmung und den Eintritt in die Austauscherbatterien (42) des Alterungsofens (40) bereitzustellen.

10. Anlage (10) gemäß Anspruch 1, wobei der Alterungsofen (40) mit direktem Heizen gestellt ist, die mittels der Zuführung der Rauchgase, die in Leitung (43) nach Durchgehen durch den pulsierenden Brenner (12) transportiert werden und zu den direkten Einlassmundöffnungen (46) geschickt werden und anschließend durch Saugmundöffnungen (47) entfernt und zu der Austragsleitung (45) geschickt werden, erhalten wird.

11. Anlage (10) gemäß Anspruch 10, wobei Einlassventile (48) vorhanden sind, die entlang von Verzweigungen der Leitungen (43) so positioniert sind, dass sie jede Einlassmundöffnung (46) kontrollieren, wobei die Einlassventile (48) funktionsfähig mit Austragungsventilen (49) verbunden sind, die an Verzweigungen der Austragungsleitung (45) angeordnet sind, um so die vorher festgelegte Temperatur in dem Alterungsofen bereitzustellen.

12. Anlage (10) gemäß Anspruch 10, wobei ein Teilungsventil (50) stromaufwärts des Alterungsofens (40) vorgesehen ist, um die Rauchgase, die aus dem pulsierenden Brenner kommen, abzufangen und sie direkt zu der Austragungsleitung (45) zu schicken.

13. Anlage (10) gemäß Anspruch 1, wobei der Lösungsofen mit indirektem Heizen betrieben wird und mit indirekten Strahlungsrohrbrennern (29), die entlang des Lösungsofens positioniert sind, ausgestattet ist.

14. Anlage (10) gemäß Anspruch 13, wobei die Anlage den Lösungsofen mit indirektem Heizen und den Alterungsofen mit indirektem Heizen mittels Austauscherelementen (37) in Serie mit jedem der Rohre der indirekten Strahlungsrohrbrenner (29) hat.

15. Anlage (10) gemäß Anspruch 1, wobei die Anlage den Lösungsofen (20) mit indirektem Heizen und den Alterungsofen (40) mit direktem Heizen hat.

## Revendications

1. Installation (10) pour le traitement thermique d'éléments en alliage léger (13), comprenant un four de solubilisation (20) équipé de premiers moyens de chauffage (22, 29), un réservoir de trempe (11), un four de revenu (40) équipé de seconds moyens de chauffage (42, 46), **caractérisée en ce que** ladite installation comprend également un brûleur à impulsions (12) reliée auxdits deux fours (20, 40) et des seconds moyens de chauffage (42, 46) sont présents pour récupérer l'énergie thermique des vapeurs produites par les premiers moyens de chauffage (22, 29) et le brûleur à impulsions (12).

2. Installation (10) selon la revendication 1, dans laquelle des conduites (26) sont présentes pour acheminer les vapeurs générées dans le four de solubilisation (20), tout d'abord vers le brûleur à impulsions (12) et ensuite, au moyen de conduites (43) vers les seconds moyens de chauffage (42, 46) dont est équipé le four de revenu (40).

3. Installation (10) selon la revendication 1, dans laquelle un ventilateur de combustion (28) assure l'alimentation en air comburant des premiers moyens de chauffage (22, 29) positionnés dans le four de solubilisation (40) à travers de premiers conduits (23) et également l'alimentation du brûleur à impulsions (12) au moyen d'un second conduit (24).

4. Installation (10) selon la revendication 1, dans laquelle en aval dudit four de revenu, se trouve un appareil d'évacuation (60) des vapeurs relié au moyen de la conduite d'évacuation (45).

5. Installation (10) selon la revendication 4, dans laquelle ledit appareil d'évacuation (60) des vapeurs qui est situé sur la conduite d'évacuation (45) est équipé d'un ventilateur (61) assemblé à un échangeur air-air (62) de sorte à abaisser la température des vapeurs attirées par un ventilateur d'extraction (63).

6. Installation (10) selon la revendication 5, dans laquelle la présence d'un débitmètre Venturi (64) est également envisagée en aval du brûleur à impulsions ou du ventilateur d'extraction (63), pour mesurer le volume d'air passant à travers le four de revenu (40).

7. Installation (10) selon la revendication 6, dans laquelle lesdits seconds moyens de chauffage (42) dont est équipé le four de revenu (40), comprennent des éléments de chauffage indirect sous la forme de batteries échangeuses (42).

8. Installation (10) selon la revendication 7, dans laquelle est envisagée la présence de soupapes à trois voies (44) pour assurer, dans une position, l'alimentation des batteries échangeuses de chaleur (42) ou pour envoyer, dans une autre position, les vapeurs à l'appareil d'évacuation de vapeur (60).

9. Installation (10) selon la revendication 8, dans laquelle est également envisagée la présence de soupapes unidirectionnelles (27), de clapets, appropriés pour fournir le flux d'air correct au brûleur à impulsions (12) pour le chauffage et l'entrée dans les batteries échangeuses (42) du four de revenu (40).

10. Installation (10) selon la revendication 1, dans laquelle ledit four de revenu (40) possède un chauffage direct, obtenu au moyen de la fourniture des vapeurs qui sont acheminées la conduite (43) après passage à travers le brûleur à impulsions (12) et envoyées vers des bouches d'entrée directe (46) et ensuite, retirées par des bouches d'aspiration (47) et envoyées au conduit d'évacuation (45).

11. Installation (10) selon la revendication 10, dans laquelle sont présentes des soupapes d'entrée (48), positionnées le long des branchements des conduits (43) de sorte à contrôler chaque bouche d'entrée (46), lesdites soupapes d'entrée (48) étant reliées de façon opérationnelle aux soupapes d'évacuation (49) situées sur les branchements du conduit d'évacuation (45) de sorte à fournir la température préétablie dans le four de revenu.

12. Installation (10) selon la revendication 10, dans laquelle la présence d'une soupape de partialisation (50) est envisagée en amont du four de revenu (40) pour intercepter les vapeurs provenant du brûleur à impulsions et les envoyer directement à la conduite d'évacuation (45).

13. Installation (10) selon la revendication 1, dans laquelle ledit four de solubilisation possède un chauffage indirect et est équipé de brûleurs à tubes radiants indirects (29) positionnés le long du four de solubilisation.

14. Installation (10) selon la revendication 13, dans laquelle l'installation a un four de solubilisation avec chauffage indirect et un four de revenu avec chauffage indirect, au moyen d'éléments échangeurs (37) en série avec chacun des tubes des brûleurs à tubes radiants indirects (29).

15. Installation (10) selon la revendication 1, dans laquelle l'installation a un four de solubilisation (20) avec chauffage indirect et un four de revenu (40) avec chauffage direct.
